# EUROPEAN PATENT APPLICATION

(11) **EP 4 550 104 A1**
(43) Date of publication of application: **07.05.2025**
(21) Application number: 23830094.1
(22) Date of filing: 21.06.2023
(51) Int. Cl.: G06F 3/04815

(54) **SCANNING DATA DISPLAY METHOD AND APPARATUS, DEVICE AND STORAGE MEDIUM**

(30) Priority: 30.06.2022 CN 202210772727
(71) Applicant: Shining 3D Tech Co., Ltd., Hangzhou, Zhejiang 311258 (CN)
(72) Inventor: LIN, Zhongwei, Hangzhou, Zhejiang 311258 (CN); JIANG, Tengfei, Hangzhou, Zhejiang 311258 (CN); ZHANG, Jian, Hangzhou, Zhejiang 311258 (CN)
(74) Representative: Dehns Germany Partnerschaft mbB
(86) International application number: PCT/CN2023/101828
(87) International publication number: WO 2024/001915

(57) **Abstract**

The present disclosure relates to a method and apparatus for displaying scanning data, and a device and a storage medium. First, when a three-dimensional scanning device scans a target object on the basis of a first scanning mode, initial scanning data corresponding to the first scanning mode is displayed on an interaction interface; then, a first region is determined from the interaction interface; and then, when the three-dimensional scanning device is switched from the first scanning mode to a second scanning mode, target scanning data corresponding to the second scanning mode is acquired, where one type of scanning data between the initial scanning data and the target scanning data is displayed inside the first region, and the other type of the scanning data between the initial scanning data and the target scanning data is displayed outside the first region. Therefore, scanning data corresponding to different scanning modes may be separated through the first region, thereby preventing the scanning data corresponding to different scanning modes from overlapping during display.

## Description

The present disclosure claims priority to Chinese Patent Application No. 2022107727276 filed to the China National Intellectual Property Administration on June 30, 2022 and entitled "Method and Apparatus for Displaying Scanning Data, and Device and Storage Medium", the disclosure of which is hereby incorporated by reference in its entirety.

### Technical Field

The present disclosure relates to the technical field of multi-mode scanning, and in particular, to a method and apparatus for displaying scanning data, and a device and a storage medium.

### Background

Scanning data is data that is obtained after a target object is scanned by a three-dimensional scanning device. The three-dimensional scanning device can provide various scanning modes, and each scanning mode has its own different characteristics. For example, a laser scanning mode has the characteristic of being high in accuracy but low in scanning efficiency; and a speckle scanning mode has the characteristic of being high in scanning efficiency but low in accuracy.

As the structure of the target object and user demands continuously update, various modes need to be used to scan the target object. However, after various scanning modes are used for scanning, scanning data corresponding to different scanning modes overlaps during display, leading to cross contamination in the scanning data. Therefore, proposing a method for displaying scanning data to prevent scanning data from overlapping during display is a technical problem to be urgently solved currently.

### Summary

### (I) Technical problem to be solved

In order to solve the above technical problem or at least partially solve the above technical problem, the present disclosure provides a method and apparatus for displaying scanning data, and a device and a storage medium.

### (II) Technical solution

Embodiments of the present disclosure provide a method for display scanning data. The method includes the following operations.

When a three-dimensional scanning device scans a target object on the basis of a first scanning mode, initial scanning data corresponding to the first scanning mode is displayed on an interaction interface.

A first region is determined from the interaction interface.

When the three-dimensional scanning device is switched from the first scanning mode to a second scanning mode, target scanning data corresponding to the second scanning mode is acquired, where one type of scanning data between the initial scanning data and the target scanning data is displayed inside the first region, and the other type of the scanning data between the initial scanning data and the target scanning data is displayed outside the first region.

The embodiments of the present disclosure further provide an apparatus for displaying scanning data. The apparatus includes a first display component, a first region determination component, and a second display component.

The first display component is configured to, when a three-dimensional scanning device scans a target object on the basis of a first scanning mode, display initial scanning data corresponding to the first scanning mode on an interaction interface.

The first region determination component is configured to determine a first region from the interaction interface.

The second display component is configured to, when the three-dimensional scanning device is switched from the first scanning mode to a second scanning mode, acquire target scanning data corresponding to the second scanning mode, where one type of scanning data between the initial scanning data and the target scanning data is displayed inside the first region, and the other type of the scanning data between the initial scanning data and the target scanning data is displayed outside the first region.

The embodiments of the present disclosure further provide an electronic device. The device includes: one or more processors; and a storage apparatus.

The storage apparatus is configured to store one or more programs.

When one or more programs are executed by the one or more processors, the one or more processors are enabled to implement the method for displaying scanning data provided in the first aspect.

The embodiments of the present disclosure further provide a computer-readable storage medium. The storage medium stores a computer program. The computer program is configured to execute the method for displaying scanning data provided in the embodiments of the present disclosure.

### (III) Beneficial effects

The above technical solutions provided in the embodiments of the present disclosure have the following advantages compared with the related art.

According to the method and apparatus for displaying scanning data, and the device and the storage medium provided in the embodiments of the present disclosure, when the three-dimensional scanning device scans the target object on the basis of the first scanning mode, the initial scanning data corresponding to the first scanning mode is displayed on the interaction interface; then, the first region is determined from the interaction interface; and then, when the three-dimensional scanning device is switched from the first scanning mode to the second scanning mode, the target scanning data corresponding to the second scanning mode is acquired, where one type of the scanning data between the initial scanning data and the target scanning data is displayed inside the first region, and the other type of the scanning data between the initial scanning data and the target scanning data is displayed outside the first region. In this way, when different scanning modes are used for scanning, the scanning data corresponding to different scanning modes may be separated through the first region to cause the initial scanning data and the target scanning data to display in different regions, so as to prevent the scanning data corresponding to different scanning modes from overlapping during display, thereby solving the problem of cross contamination between the scanning data corresponding to different scanning modes.

It should be understood that, the above general description and the following detailed description are merely exemplary and explanatory, and cannot limit the present disclosure.

### Brief Description of the Drawings

Drawings are incorporated into the specification and constitute a part of the specification. The drawings illustrate embodiments in accordance with the present disclosure and serve to understand the principles of the present disclosure together with the specification.

In order to more clearly illustrate the embodiments of the present disclosure or the technical solutions in the related art, the drawings used in the description of the embodiments or the related art will be briefly described below. It is apparent that other drawings can be obtained from those skilled in the art according to these drawings without any creative work.
Fig. 1 is a schematic flowchart of a method for displaying scanning data according one or more embodiments of the present disclosure.
Fig. 2 is a schematic flowchart of another method for displaying scanning data according one or more embodiments of the present disclosure.
Fig. 3 is a schematic flowchart of still another method for displaying scanning data according one or more embodiments of the present disclosure.
Fig. 4 is a schematic structural diagram of an apparatus for displaying scanning data according one or more embodiments of the present disclosure.
Fig. 5 is a schematic structural diagram of an electronic device according one or more embodiments of the present disclosure.

### Detailed Description of the Embodiments

In order to make objectives, technical solutions, and advantages of embodiments of the present disclosure clearer, the technical solutions in the embodiments of the present disclosure will be clearly and completely described below. It is apparent that the described embodiments are only part of the embodiments of the present disclosure, not all the embodiments. Based on the embodiments in the present disclosure, all other embodiments obtained by those of ordinary skill in the art without creative work shall fall within the protection scope of the present disclosure.

In order to solve the above problems, the present disclosure provides a method and apparatus for displaying scanning data, and a device and a storage medium.

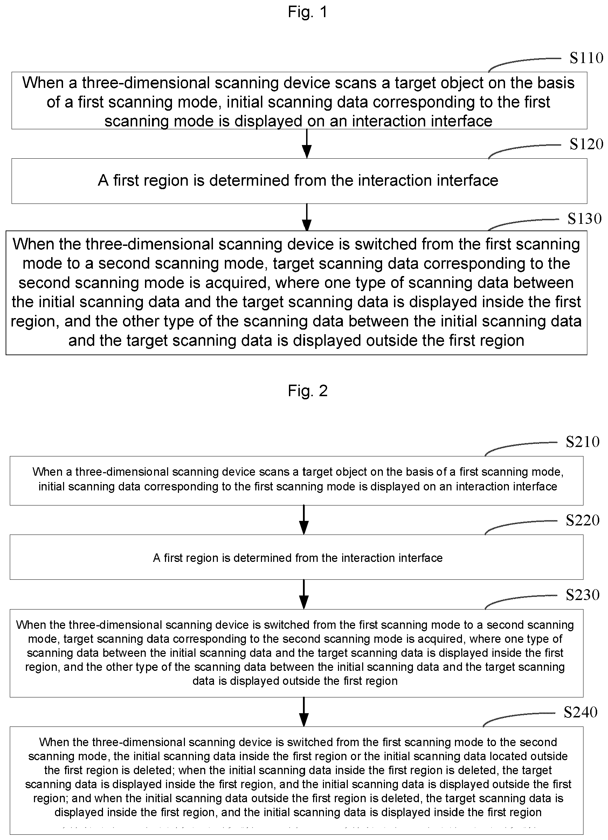

The method for displaying scanning data provided in the embodiments of the present disclosure is described below with reference to Fig. 1 to Fig. 3. In some embodiments of the present disclosure, the method for displaying scanning data may be executed by an electronic device. The electronic device may include devices such as a tablet computer, a desktop computer, a notebook computer, etc. having a communication function, or may also include devices simulated by virtual machines or simulators.

Fig. 1 is a schematic flowchart of a method for display scanning data according to embodiments of the present disclosure.

As shown in Fig. 1, the method for displaying scanning data may include the following steps.

At S110, when a three-dimensional scanning device scans a target object on the basis of a first scanning mode, initial scanning data corresponding to the first scanning mode is displayed on an interaction interface.

In some embodiments of the present disclosure, when the three-dimensional scanning device scans the target object on the basis of the first scanning mode, the electronic device may acquire the initial scanning data corresponding to first scanning data in real time, and display the initial scanning data on the interaction interface of the electronic device.

In some embodiments of the present disclosure, the first scanning mode may be an initial scanning mode corresponding to a scanning apparatus on the three-dimensional scanning device.

In some embodiments of the present disclosure, the first scanning mode may be a speckle scanning mode, a laser scanning mode, a dot pitch scanning mode, a texture scanning mode, or the like. The laser scanning mode may also include scanning modes such as a cross line scanning mode, a parallel line scanning mode, a single line scanning mode, etc.

In some embodiments of the present disclosure, the interaction interface refers to a visual interface that interacts with a user. In some embodiments of the present disclosure, the interaction interface may display the scanning data, and simultaneously provides related controls for controlling scanning.

In some embodiments of the present disclosure, the related controls for controlling scanning may include a scanning manner selection control, a scanning region switching control, a brightness adjustment control, etc.

At S120, a first region is determined from the interaction interface.

In some embodiments of the present disclosure, in the process of displaying the initial scanning data by the electronic device through the interaction interface, if the user wants to switch the scanning mode, the first region is determined from the interaction interface, such that the scanning data corresponding to different modes is separated through the first region.

In some embodiments of the present disclosure, before determining the first region, the electronic device may control the three-dimensional scanning device to switch modes; or after determining the first region, the electronic device may control the three-dimensional scanning device to switch the modes; or while determining the first region, the electronic device may control the three-dimensional scanning device to switch the modes. That is to say, a sequence of the process of determining the first region and the process of switching the modes is not limited.

In some embodiments of the present disclosure, the first region refers to any region in a region in which the initial scanning data is distributed on the interaction interface.

At S130, when the three-dimensional scanning device is switched from the first scanning mode to a second scanning mode, target scanning data corresponding to the second scanning mode is acquired, where one type of scanning data between the initial scanning data and the target scanning data is displayed inside the first region, and the other type of the scanning data between the initial scanning data and the target scanning data is displayed outside the first region.

In some embodiments of the present disclosure, after determining that the three-dimensional scanning device is switched from the first scanning mode to the second scanning mode, the electronic device may acquire the target scanning data corresponding to second scanning data in real time, so as to display the target scanning data on the interaction interface of the electronic device.

In some embodiments of the present disclosure, the second scanning mode may be a scanning mode after the scanning apparatus on the three-dimensional scanning device is switched. The second scanning mode is different from the first scanning mode.

It is to be noted that, after the initial scanning data is acquired, the initial scanning data is displayed both inside and outside the first region. Therefore, if the target scanning data is about to be displayed inside the first region, the initial scanning data inside the first region needs to be deleted first, the initial scanning data outside the first region is reserved, then the target scanning data is displayed inside the first region, and the initial scanning data is displayed outside the first region; and if the target scanning data is about to be displayed outside the first region, the initial scanning data outside the first region needs to be deleted first, initial scanning data inside the first region is reserved, then the target scanning data is displayed outside the first region, and the initial scanning data is displayed inside the first region.

In some embodiments of the present disclosure, first, the electronic device may acquire three-dimensional coordinate data respectively corresponding to the initial scanning data and the target scanning data; then screen coordinate data respectively corresponding to the initial scanning data and the target scanning data is calculated according to the three-dimensional coordinate data respectively corresponding to the initial scanning data and the target scanning data, a two-dimensional coordinate range of the first region in a screen coordinate system, and a conversion relationship between the screen coordinate system and a world coordinate system; then, according to the two-dimensional coordinate range of the first region and the screen coordinate data respectively corresponding to the initial scanning data and the target scanning data, one type of the scanning data between the initial scanning data and the target scanning data is displayed inside the first region, and the other type of the scanning data between the initial scanning data and the target scanning data is displayed outside the first region.

According to the method for displaying scanning data in the embodiments of the present disclosure, when the three-dimensional scanning device scans the target object on the basis of the first scanning mode, the initial scanning data corresponding to the first scanning mode is displayed on the interaction interface; then, the first region is determined from the interaction interface; and then, when the three-dimensional scanning device is switched from the first scanning mode to the second scanning mode, the target scanning data corresponding to the second scanning mode is acquired, where one type of the scanning data between the initial scanning data and the target scanning data is displayed inside the first region, and the other type of the scanning data between the initial scanning data and the target scanning data is displayed outside the first region. In this way, when different scanning modes are used for scanning, the scanning data corresponding to different scanning modes may be separated through the first region to cause the initial scanning data and the target scanning data to display in different regions, so as to prevent the scanning data corresponding to different scanning modes from overlapping during display, thereby solving the problem of cross contamination between the scanning data corresponding to different scanning modes.

In some embodiments of the present disclosure, after it is determined that the three-dimensional scanning device switches the scanning mode, the initial scanning data inside the first region or the initial scanning data outside the first region may be deleted according to different requirements.

Fig. 2 is a schematic flowchart of another method for displaying scanning data according to embodiments of the present disclosure.

As shown in Fig. 2, the method for displaying scanning data may include the following steps.

At S210, when a three-dimensional scanning device scans a target object on the basis of a first scanning mode, initial scanning data corresponding to the first scanning mode is displayed on an interaction interface.

S210 is similar to S110, and is not described herein again.

At S220, a first region is determined from the interaction interface.

In some embodiments of the present disclosure, S220 may specifically include the following steps.

At S2201, in response to acquiring a region selection operation, the first region is determined from the interaction interface.

The region selection operation refers to a user operation for region selection. In some embodiments of the present disclosure, the region selection operation may be a region shape selection operation, or may also be a region shape drawing operation, etc.

In some embodiments of the present disclosure, S220 may specifically include the following steps.

At S2202, the first region is determined from the interaction interface according to a point cloud feature of initial point cloud data.

In some embodiments of the present disclosure, feature analysis may be performed on the initial point cloud data to obtain the point cloud feature, and then, regional division is performed on the interaction interface based on the point cloud feature, so as to obtain the first region.

In some embodiments of the present disclosure, density analysis may be performed on the initial point cloud data to obtain point cloud densities of the initial point cloud data in different regions; or feature type analysis may be performed on the initial point cloud data to obtain feature types of the initial point cloud data in different regions. The feature type may include a strong feature and a planar feature.

In some other embodiments of the present disclosure, S220 may specifically include the following steps.

At S2203, the first region is determined from the interaction interface according to a structure feature of the target object.

The structure feature is used to characterize a spatial structure feature of the target object itself.

In some other embodiments of the present disclosure, the structure feature may include a shape feature and complexity feature of the target object.

Therefore, in some embodiments of the present disclosure, the first region can be determined by means of interaction, or may also be determined automatically, thereby guaranteeing the flexibility and accuracy of the manner for determining the first region.

At S230, when the three-dimensional scanning device is switched from the first scanning mode to a second scanning mode, target scanning data corresponding to the second scanning mode is acquired, where one type of scanning data between the initial scanning data and the target scanning data is displayed inside the first region, and the other type of the scanning data between the initial scanning data and the target scanning data is displayed outside the first region.

S230 is similar to S130, and is not described herein again.

At S240, when the three-dimensional scanning device is switched from the first scanning mode to the second scanning mode, the initial scanning data inside the first region or the initial scanning data located outside the first region is deleted; when the initial scanning data inside the first region is deleted, the target scanning data is displayed inside the first region, and the initial scanning data is displayed outside the first region; and when the initial scanning data outside the first region is deleted, the target scanning data is displayed inside the first region, and the initial scanning data is displayed inside the first region.

In the embodiments of the present disclosure, optionally, S240 may specifically include the following steps.

At S2401, a three-dimensional coordinate range of the first region in a world coordinate system is calculated according to a two-dimensional coordinate range of the first region in a screen coordinate system and a conversion relationship between the screen coordinate system and the world coordinate system.

At S2402, the initial scanning data inside the first region or the initial scanning data located outside the first region is deleted according to the three-dimensional coordinate range of the first region.

The screen coordinate system refers to a coordinate system in which the interaction interface is located, and the world coordinate system refers to a coordinate system in which the scanning data is located.

The conversion relationship between the screen coordinate system and the world coordinate system may include a rotation matrix and a translation matrix, and the conversion relationship is determined in advance.

The three-dimensional coordinate range refers to three-dimensional coordinates of the first region in the world coordinate system. The three-dimensional coordinate range may be represented as (x,y,z).

In some other embodiments of the present disclosure, after the three-dimensional coordinate range of the first region is determined, the initial scanning data located within the three-dimensional coordinate range or the initial scanning data located outside the three-dimensional coordinate range may be acquired, and the initial scanning data inside the first region or the initial scanning data outside the first region is deleted.

It is to be noted that, S230 and S240 may also be executed simultaneously, or S240 may be executed first and S230 is then executed, and details are not described herein again.

Therefore, in some embodiments of the present disclosure, after it is detected that the three-dimensional scanning device switches the mode, the initial scanning data inside the first region or the initial scanning data outside the first region may be deleted to cause the scanning data corresponding to different scanning modes to be displayed both inside and outside the first region, so as to prevent the scanning data corresponding to different scanning modes from overlapping during display, thereby solving the problem of cross contamination between the scanning data corresponding to different scanning modes.

Further, after the target scanning data corresponding to the second scanning mode is acquired, the initial scanning data and the target scanning data in different regions may also be spliced to obtain a splicing result for the scanning data, and the splicing result for the scanning data is displayed. It is to be noted that, the scanning data displayed in different regions may be the splicing result for the scanning data, and the splicing result for the scanning data may be a three-dimensional model.

In some embodiments of the present disclosure, splicing the initial scanning data and the target scanning data in different regions may specifically include the following steps.

The initial scanning data and the target scanning data are spliced according to the two-dimensional coordinate range of the first region in the screen coordinate system, so as to obtain the splicing result for the scanning data.

In some embodiments of the present disclosure, the scanning data inside the first region and the scanning data outside the first region may be spliced according to the two-dimensional coordinate range of the first region, so as to obtain the splicing result for the scanning data.

In some other embodiments of the present disclosure, splicing the initial scanning data and the target scanning data in different regions may specifically include the following steps.

The initial scanning data and the target scanning data are spliced according to two-dimensional coordinate data of a preset mark point in the screen coordinate system, so as to obtain the splicing result for the scanning data.

In some embodiments of the present disclosure, before the target object is scanned, a mark point may be set for the target object; after the target object is scanned, the scanning data corresponding to the preset mark point may be acquired; and the electronic device may determine the two-dimensional coordinate data of the preset mark point in the screen coordinate system, and then splice the initial scanning data and the target scanning data according to the two-dimensional coordinate data of the preset mark point in the screen coordinate system, so as to obtain the splicing result for the scanning data.

Actually, the target object has a plurality of actually present mark points. The mark point may be a sticker attached to the target object, or may also be a feature of the target object itself. In some embodiments of the present disclosure, scanning mark points obtained through scanning based on the mark points are present in the scanning data. One scanning mark point corresponds to a mark point of the target object.

In some other embodiments of the present disclosure, splicing the initial scanning data and the target scanning data in different regions may specifically include the following steps.

The initial scanning data and the target scanning data are spliced according to the two-dimensional coordinate range of the first region in the screen coordinate system, so as to obtain a preliminary splicing result for the scanning data; and the preliminary splicing result is corrected according to the two-dimensional coordinate data of the preset mark point in the screen coordinate system, so as to obtain the splicing result for the scanning data.

In some embodiments of the present disclosure, first, a trimming range is determined by using the two-dimensional coordinate range of the first region, and the initial scanning data and the target scanning data are spliced according to the trimming range, so as to obtain the preliminary splicing result for the scanning data; then, three-dimensional coordinate data of the mark point is determined according to the two-dimensional coordinate data of the preset mark point in the screen coordinate system; and finally, the three-dimensional coordinate data of the scanning mark point in the preliminary splicing result is aligned with the three-dimensional coordinate data of the preset mark point, and the preliminary splicing result may be corrected to obtain the splicing result for the scanning data.

In some other embodiments of the present disclosure, splicing the initial scanning data and the target scanning data in different regions may specifically include the following steps.

The initial scanning data and the target scanning data are spliced according to the two-dimensional coordinate data of the preset mark point in the screen coordinate system, so as to obtain the preliminary splicing result for the scanning data.

The preliminary splicing result is corrected according to the two-dimensional coordinate range of the first region in the screen coordinate system, so as to obtain the splicing result for the scanning data.

In some embodiments of the present disclosure, first, the three-dimensional coordinate data of the mark point is determined according to the two-dimensional coordinate data of the preset mark point in the screen coordinate system; then, the initial scanning data and the target scanning data are spliced based on the three-dimensional coordinate data of the preset mark point, so as to obtain the preliminary splicing result for the scanning data; and then, the trimming range is determined by using the two-dimensional coordinate range of the first region, and the preliminary splicing result is corrected according to the trimming range, so as to obtain the splicing result for the scanning data.

Therefore, in the embodiments of the present disclosure, after the initial scanning data and the target scanning data are acquired, the splicing of the scanning data may be performed by using different splicing modes, thereby guaranteeing the smoothness and flexibility of a scanning splicing process.

In another implementation of the present disclosure, the three-dimensional scanning device may also be controlled to be switched from the second scanning mode to the first scanning mode or switched to other scanning modes according to user requirements, and display the scanning data corresponding to different scanning modes in different regions.

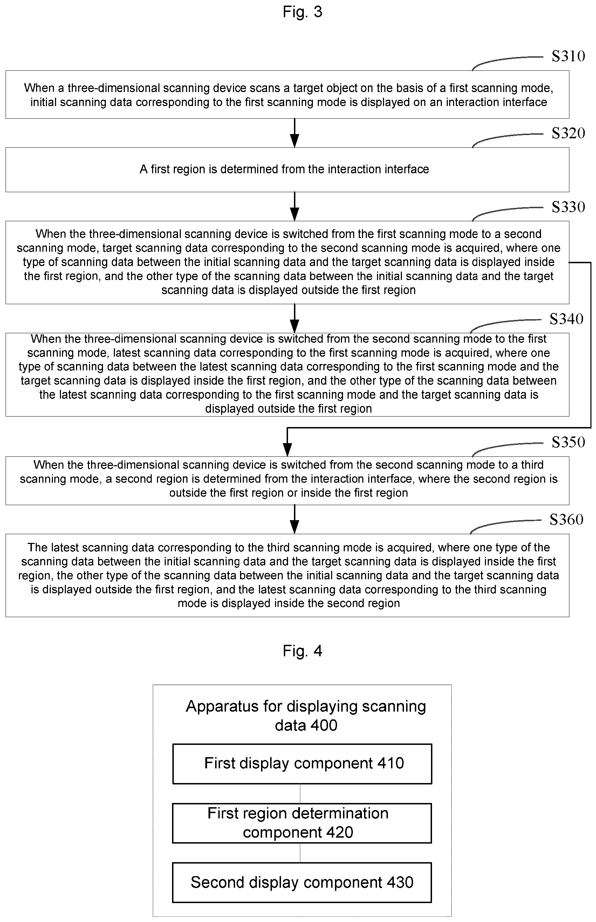

Fig. 3 is a schematic flowchart of still another method for displaying scanning data according to embodiments of the present disclosure.

At S310, when a three-dimensional scanning device scans a target object on the basis of a first scanning mode, initial scanning data corresponding to the first scanning mode is displayed on an interaction interface.

At S320, a first region is determined from the interaction interface.

At S330, when the three-dimensional scanning device is switched from the first scanning mode to a second scanning mode, target scanning data corresponding to the second scanning mode is acquired, where one type of scanning data between the initial scanning data and the target scanning data is displayed inside the first region, and the other type of the scanning data between the initial scanning data and the target scanning data is displayed outside the first region.

Specific implementations of S310 to S330 may be referred to descriptions of the foregoing embodiments, and are not described herein again.

At S340, when the three-dimensional scanning device is switched from the second scanning mode to the first scanning mode, latest scanning data corresponding to the first scanning mode is acquired, where one type of scanning data between the latest scanning data corresponding to the first scanning mode and the target scanning data is displayed inside the first region, and the other type of the scanning data between the latest scanning data corresponding to the first scanning mode and the target scanning data is displayed outside the first region.

In some embodiments of the present disclosure, when the three-dimensional scanning device scans based on a second scanning device, the three-dimensional scanning device may be switched back to the original scanning mode. After determining that the three-dimensional scanning device is switched from the second scanning mode to the first scanning mode, the electronic device may acquire the latest scanning data corresponding to first scanning data in real time, and display the latest scanning data corresponding to the first scanning mode on the interaction interface of the electronic device.

It may be understood that, when S330 is executed, if the target scanning data is display inside the first region and the initial scanning data is displayed outside the first region, when S340 is executed, the target scanning data is continuously displayed inside the first region, and the latest scanning data corresponding to the first scanning mode is displayed outside the first region; and when S330 is executed, if the target scanning data is display outside the first region and the initial scanning data is displayed inside the first region, when S340 is executed, the target scanning data is continuously displayed outside the first region, and the latest scanning data corresponding to the first scanning mode is displayed inside the first region.

Therefore, in some embodiments of the present disclosure, if the three-dimensional scanning device is switched from the second scanning mode to the first scanning mode, the scanning data corresponding to different scanning modes may be continuously displayed in different regions.

At S350, when the three-dimensional scanning device is switched from the second scanning mode to a third scanning mode, a second region is determined from the interaction interface, where the second region is outside the first region or inside the first region.

In some embodiments of the present disclosure, when the three-dimensional scanning device scans based on the second scanning device, the three-dimensional scanning device may be switched to the third scanning mode. After determining that the three-dimensional scanning device is switched from the second scanning mode to the third scanning mode, the electronic device may acquire latest scanning data corresponding to third scanning data in real time, and display the latest scanning data corresponding to the third scanning mode on the interaction interface of the electronic device. Meanwhile, the second region may be determined from the interaction interface.

The manner of specifically determining the second region may be referred to S220, and is not described herein again.

At S360, the latest scanning data corresponding to the third scanning mode is acquired, where one type of the scanning data between the initial scanning data and the target scanning data is displayed inside the first region, the other type of the scanning data between the initial scanning data and the target scanning data is displayed outside the first region, and the latest scanning data corresponding to the third scanning mode is displayed inside the second region.

In some embodiments of the present disclosure, if the second region is outside the first region, one type of the scanning data between the initial scanning data and the target scanning data is displayed inside the first region, the other type of the scanning data between the initial scanning data and the target scanning data is displayed outside the first region and second region, and the latest scanning data corresponding to the third scanning mode is displayed inside the second region.

In some other embodiments of the present disclosure, if the second region is inside the first region, one type of the scanning data between the initial scanning data and the target scanning data is displayed inside the first region and outside the second region, the other type of the scanning data between the initial scanning data and the target scanning data is displayed outside the first region, and the latest scanning data corresponding to the third scanning mode is displayed inside the second region.

Therefore, in some embodiments of the present disclosure, after the three-dimensional scanning device is switched from the second scanning mode to other scanning modes such as the third scanning mode, the second region may be determined, and the scanning data corresponding to different scanning modes is displayed in different regions, thereby ensuring that the problem of cross contamination in the scanning data corresponding to different scanning modes during a multi-mode scanning process does not occur.

The embodiments of the present disclosure further provide an apparatus for displaying scanning data for implementing the method for displaying scanning data, and descriptions are performed below with reference to Fig. 4. In some embodiments of the present disclosure, the apparatus for displaying scanning data may be an electronic device. The electronic device may include devices such as a tablet computer, a desktop computer, a notebook computer, etc. having a communication function, or may also include devices simulated by virtual machines or simulators.

Fig. 4 is a schematic structural diagram of an apparatus for displaying scanning data according the embodiments of the present disclosure.

As shown in Fig. 4, the apparatus for displaying scanning data 400 may include a first display component, a first region determination component, and a second display component.

The first display component 410 is configured to, when a three-dimensional scanning device scans a target object on the basis of a first scanning mode, display initial scanning data corresponding to the first scanning mode on an interaction interface.

The first region determination component 420 is configured to determine a first region from the interaction interface.

The second display component 430 is configured to, when the three-dimensional scanning device is switched from the first scanning mode to a second scanning mode, acquire target scanning data corresponding to the second scanning mode, where one type of scanning data between the initial scanning data and the target scanning data is displayed inside the first region, and the other type of the scanning data between the initial scanning data and the target scanning data is displayed outside the first region.

According to the apparatus for displaying scanning data in the embodiments of the present disclosure, when the three-dimensional scanning device scans the target object on the basis of the first scanning mode, the initial scanning data corresponding to the first scanning mode is displayed on the interaction interface; then, the first region is determined from the interaction interface; and then, when the three-dimensional scanning device is switched from the first scanning mode to the second scanning mode, the target scanning data corresponding to the second scanning mode is acquired, where one type of the scanning data between the initial scanning data and the target scanning data is displayed inside the first region, and the other type of the scanning data between the initial scanning data and the target scanning data is displayed outside the first region. In this way, when different scanning modes are used for scanning, the scanning data corresponding to different scanning modes may be separated through the first region to cause the initial scanning data and the target scanning data to display in different regions, so as to prevent the scanning data corresponding to different scanning modes from overlapping during display, thereby solving the problem of cross contamination between the scanning data corresponding to different scanning modes.

In some embodiments of the present disclosure, the first region determination component 420 is specifically configured to, in response to acquiring of a region selection operation, determine the first region from the interaction interface.

In some embodiments of the present disclosure, the apparatus further includes an initial scanning data deletion component.

The initial scanning data deletion component is configured to, when the three-dimensional scanning device is switched from the first scanning mode to the second scanning mode, delete the initial scanning data inside the first region or the initial scanning data outside the first region. When the initial scanning data inside the first region is deleted, the target scanning data is displayed inside the first region, and the initial scanning data is displayed outside the first region; and when the initial scanning data outside the first region is deleted, the target scanning data is displayed outside the first region, and the initial scanning data is displayed inside the first region.

In some embodiments of the present disclosure, the initial scanning data deletion component includes a three-dimensional coordinate range calculation unit and an initial scanning data deletion unit.

The three-dimensional coordinate range calculation unit is configured to calculate a three-dimensional coordinate range of the first region in a world coordinate system according to a two-dimensional coordinate range of the first region in a screen coordinate system and a conversion relationship between the screen coordinate system and the world coordinate system.

The initial scanning data deletion unit is configured to delete the initial scanning data inside the first region or the initial scanning data outside the first region according to the three-dimensional coordinate range of the first region.

In some embodiments of the present disclosure, the apparatus further includes a first splicing component and/or a second splicing component.

The first splicing component is configured to splice the initial scanning data and the target scanning data according to the two-dimensional coordinate range of the first region in the screen coordinate system, so as to obtain a splicing result for the scanning data.
And/or

The second splicing component is configured to splice the initial scanning data and the target scanning data according to two-dimensional coordinate data of a preset mark point in the screen coordinate system, so as to obtain the splicing result for the scanning data.

In some embodiments of the present disclosure, the apparatus further includes a first acquisition component.

The first acquisition component is configured to, when the three-dimensional scanning device is switched from the second scanning mode to the first scanning mode, acquire latest scanning data corresponding to the first scanning mode. One type of scanning data between the latest scanning data corresponding to the first scanning mode and the target scanning data is displayed inside the first region, and the other type of the scanning data between the latest scanning data corresponding to the first scanning mode and the target scanning data is displayed outside the first region.

In some embodiments of the present disclosure, the apparatus further includes the first region determination component and a second acquisition component.

The first region determination component is configured to, when the three-dimensional scanning device is switched from the second scanning mode to a third scanning mode, determine a second region from the interaction interface. The second region is located outside the first region or inside the first region.

The second acquisition component is configured to acquire the latest scanning data corresponding to the third scanning mode. One type of the scanning data between the initial scanning data and the target scanning data is displayed inside the first region, the other type of the scanning data between the initial scanning data and the target scanning data is displayed outside the first region, and the latest scanning data corresponding to the third scanning mode is displayed inside the second region.

It is to be noted that, the apparatus for displaying scanning data 400 shown in Fig. 4 may execute each step in the method embodiment show in Fig. 1 to Fig. 3, and implement each process and effect in the method embodiment show in Fig. 1 to Fig. 3, and details are not described herein again.

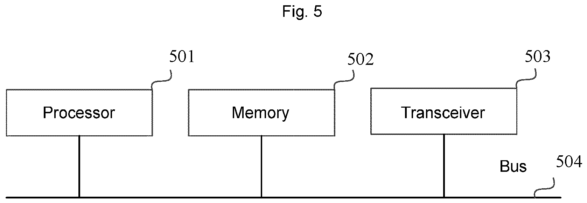

Fig. 5 is a schematic structural diagram of a device for displaying scanning data according the embodiments of the present disclosure.

As shown in Fig. 5, the device for displaying scanning data may include a processor 501 and a memory 502 storing a computer program instruction.

In some embodiments of the present disclosure, the processor 501 may include a Central Processing Unit (CPU), or an Application Specific Integrated Circuit (ASIC), or one or more integrated circuits configured to implement the embodiments of the present application.

The memory 502 may include a large-capacity memory for information or instructions. For example, without limitation, the memory 502 may include a Hard Disk Drive (HDD), a floppy disk drive, a flash memory, an optical disk, a magnetic disc, a magnetic tape or Universal Serial Bus (USB) drive, or a combination of two or more of the above. If appropriate, the memory 502 may include removable or non-removable (or fixed) media. If appropriate, the memory 502 may be inside or outside an integrated gateway device. In specific embodiments, the memory 502 is a non-volatile solid-state memory device. In specific embodiments, the memory 502 includes a Read-Only Memory (ROM). If appropriate, the ROM may be a mask programmed ROM, a Programmable ROM (PROM), an Erasable PROM (EPROM), an Electrically Erasable Programmable ROM (EEPROM), an Electrically Alterable ROM (EAROM), or a flash memory, or a combination of two or more of the above.

The processor 501 executes steps of the method for displaying scanning data provided in the embodiments of the present disclosure by reading and executing the computer program instruction stored in the memory 502.

In some embodiments of the present disclosure, the device for displaying scanning data may further include a transceiver 503 and a bus 504. As shown in Fig. 5, the processor 501, the memory 502, and the transceiver 503 are connected through the bus 504 and complete communication with each other.

The bus 504 includes hardware, software, or both. For example, without limitation, the bus may include Accelerated Graphics Port (AGP) or other graphics buses, Extended Industry Standard Architecture (EISA) buses, Front Side BUS (FSB), Hyper Transport (HT) interconnects, Industrial Standard Architecture (ISA) buses, unlimited bandwidth interconnects, Low Pin Count (LPC) buses, memory bus, Micro Channel Architecture (MCA) buses, Peripheral Component Interconnect (PCI) buses, PCI-Express (PCI-X) buses, Serial Advanced Technology Attachment (SATA) buses, Video Electronics Standards Association Local Bus (VLB) buses or other appropriate buses or a combination of two or more of the above. If appropriate, the bus 504 may include one or more buses. Although specific buses are described and illustrated by the embodiments of the present application, in the present application, any suitable bus or interconnect is taken into consideration.

The following are embodiments of a computer-readable storage medium provided by the embodiments of the present disclosure. The computer-readable storage medium belongs to the same inventive concept as the method for displaying scanning data in the above embodiments. Details not exhaustively described in the embodiments of the computer-readable storage medium may be referred to the embodiments of the method for displaying scanning data described above.

This embodiment provides a storage medium including a computer-executable instruction. The computer-executable instruction, when being executed by a computer processor, is used to execute the method for displaying scanning data. The method includes the following operations.

When a three-dimensional scanning device scans a target object on the basis of a first scanning mode, initial scanning data corresponding to the first scanning mode is displayed on an interaction interface.

A first region is determined from the interaction interface.

When the three-dimensional scanning device is switched from the first scanning mode to a second scanning mode, target scanning data corresponding to the second scanning mode is acquired, where one type of scanning data between the initial scanning data and the target scanning data is displayed inside the first region, and the other type of the scanning data between the initial scanning data and the target scanning data is displayed outside the first region.

Definitely, in the storage medium including the computer executable instruction provided in the embodiments of the present disclosure, the computer executable instruction is not limited to execute the foregoing method operations, and may further execute related operations in the method for displaying scanning data provided in any embodiment of the present disclosure.

According to the above descriptions related to the implementations, those skilled in the art may clearly understand that the present disclosure may be implemented by using software and necessary general hardware. Definitely, it the present disclosure may also be implemented by using hardware. In many cases, the former is a more desirable implementation. Based on this understanding, the technical solutions of the present disclosure essentially, or the part contributing to the related art may be embodied in a form of a software. The computer software product may be stored in a computer-readable storage medium, such as a floppy disk of a computer, a Read-Only Memory (ROM), a Random Access Memory (RAM), a flash memory, a hard disk or an optical disk, and includes a plurality of instructions to cause a computer cloud platform (which may be a personal computer, a server, or a network cloud platform, or the like) to execute the method for displaying scanning data provided in various embodiments of the present disclosure.

It is to be noted that, the above are merely the preferred embodiments and the used technical principles of the present disclosure. Those skilled in the art can understand that the present disclosure is not limited to the specific embodiments herein, and various obvious changes, readjustments, and substitutions can be made by those skilled in the art without departing from the protection scope of the present disclosure. Therefore, the present disclosure is described in detail by the foregoing embodiments, but the present disclosure is not limited to the foregoing embodiments. Other equivalent embodiments may also be included without departing from the concept of the present disclosure. Therefore, the scope of the present disclosure depends on the scope of the appended claims.

### Industrial Applicability

According to the method for displaying scanning data provided in the present disclosure, the scanning data corresponding to different scanning modes may be separated through the first region, thereby preventing the scanning data corresponding to different scanning modes from overlapping during display.

## Claims

1. A method for displaying scanning data, comprising:
when a three-dimensional scanning device scans a target object on the basis of a first scanning mode, displaying initial scanning data corresponding to the first scanning mode on an interaction interface;
determining a first region from the interaction interface; and
when the three-dimensional scanning device is switched from the first scanning mode to a second scanning mode, acquiring target scanning data corresponding to the second scanning mode, wherein one type of scanning data between the initial scanning data and the target scanning data is displayed inside the first region, and the other type of the scanning data between the initial scanning data and the target scanning data is displayed outside the first region.

2. The method as claimed in claim 1, wherein determining the first region from the interaction interface comprises:
in response to acquiring a region selection operation, determining the first region from the interaction interface.

3. The method as claimed in claim 1, further comprising:
when the three-dimensional scanning device is switched from the first scanning mode to the second scanning mode, deleting the initial scanning data inside the first region or the initial scanning data outside the first region, wherein
when the initial scanning data inside the first region is deleted, the target scanning data is displayed inside the first region, and the initial scanning data is displayed outside the first region; and when the initial scanning data outside the first region is deleted, the target scanning data is displayed outside the first region, and the initial scanning data is displayed inside the first region.

4. The method as claimed in claim 3, wherein deleting the initial scanning data inside the first region or the initial scanning data outside the first region comprises:
calculating a three-dimensional coordinate range of the first region in a world coordinate system according to a two-dimensional coordinate range of the first region in a screen coordinate system and a conversion relationship between the screen coordinate system and the world coordinate system; and
deleting the initial scanning data inside the first region or the initial scanning data outside the first region according to the three-dimensional coordinate range of the first region.

5. The method as claimed in any one of claims 1 to 4, wherein after acquiring the target scanning data corresponding to the second scanning mode, the method further comprises:
splicing the initial scanning data and the target scanning data according to a two-dimensional coordinate range of the first region in a screen coordinate system, to obtain a splicing result for the scanning data;
and/or
splicing the initial scanning data and the target scanning data according to two-dimensional coordinate data of a preset mark point in the screen coordinate system, to obtain the splicing result for the scanning data.

6. The method as claimed in claim 1, wherein after acquiring the target scanning data corresponding to the second scanning mode, the method further comprises:
when the three-dimensional scanning device is switched from the second scanning mode to the first scanning mode, acquiring latest scanning data corresponding to the first scanning mode, wherein one type of scanning data between the latest scanning data corresponding to the first scanning mode and the target scanning data is displayed inside the first region, and the other type of the scanning data between the latest scanning data corresponding to the first scanning mode and the target scanning data is displayed outside the first region.

7. The method as claimed in claim 1, wherein after acquiring the target scanning data corresponding to the second scanning mode, the method further comprises:
when the three-dimensional scanning device is switched from the second scanning mode to a third scanning mode, determining a second region from the interaction interface, wherein the second region is outside the first region or inside the first region; and
acquiring latest scanning data corresponding to the third scanning mode, wherein one type of the scanning data between the initial scanning data and the target scanning data is displayed inside the first region, the other type of the scanning data between the initial scanning data and
the target scanning data is displayed outside the first region, and the latest scanning data corresponding to the third scanning mode is displayed inside the second region.

8. An apparatus for displaying scanning data, comprising:
a first display component, configured to, when a three-dimensional scanning device scans a target object on the basis of a first scanning mode, display initial scanning data corresponding to the first scanning mode on an interaction interface;
a first region determination component, configured to determine a first region from the interaction interface; and
a second display component, configured to when the three-dimensional scanning device is switched from the first scanning mode to a second scanning mode, acquire target scanning data corresponding to the second scanning mode, wherein one type of scanning data between the initial scanning data and the target scanning data is displayed inside the first region, and the other type of the scanning data between the initial scanning data and the target scanning data is displayed outside the first region.

9. An electronic device, comprising:
a processor; and
a memory, configured to store an executable instruction, wherein
the processor is configured to read the executable instruction from the memory, and execute the executable instruction to implement the method for displaying scanning data as claimed in any one of claims 1 to 7.

10. A computer-readable storage medium, having a computer program stored thereon, wherein the storage medium stores the computer program, and the computer program, when being executed by a processor, enables the processor to implement the method for displaying scanning data as claimed in any one of claims 1 to 7.
